# EUROPÄISCHE PATENTSCHRIFT

(11) **EP 2 301 003 B1**
(45) Veröffentlichungstag und Bekanntmachung des Hinweises auf die Patenterteilung: **07.08.2013**
(21) Anmeldenummer: 09761509.0
(22) Anmeldetag: 12.06.2009
(51) Int. Cl.: G09B 9/00, G09B 23/20

(54) **VERFAHREN ZUR SIMULATION VON IN EINEM DRUCKWASSERREAKTOR AUFTRETENDEN THERMOHYDRAULISCHEN PHÄNOMENEN**
METHOD FOR THE SIMULATION OF THERMOHYDRAULIC PHENOMENA OCCURRING IN A PRESSURIZED WATER REACTOR
PROCEDE POUR SIMULER DES PHENOMENES THERMOHYDRAULIQUES SE PRODUISANT DANS UN REACTEUR A EAU SOUS PRESSION

(30) Priorität: 13.06.2008 DE 102008028333
(43) Veröffentlichungstag der Anmeldung: 30.03.2011
(73) Patentinhaber: KSG Kraftwerks-Simulator-Gesellschaft mbH, 45257 Essen (DE)
(72) Erfinder: SEEWALD, Michael, 45147 Essen (DE)
(74) Vertreter: Stenger, Watzke & Ring
(86) Internationale Anmeldenummer: PCT/EP2009/004242
(87) Internationale Veröffentlichungsnummer: WO 2009/149946

(56) Entgegenhaltungen:
- DE-A1- 3 624 119
- DE-A1- 19 749 714
- DE-B1- 2 842 024
- US-A- 3 082 546
- US-A- 4 042 813
- US-A- 4 216 593
- US-A- 4 545 766
- JURE MARN ET AL: "Experimental models of medium break loss of coolant accidents with and without steam generator tube rupture" INTERNATIONAL JOURNAL OF PRESSURE VESSELS AND PIPING, [Online] Bd. 80, Nr. 10, 2003, Seiten 737-744, XP002550949 Gefunden im Internet: URL:http://dx.doi.org/10.1016/j.ijpvp.2003 .08.001> [gefunden am 2009-10-16]
- JURA MARN ET AL: "START - Glass Model of PWR" PROCEEDINGS NUCLEAR ENERGY IN CENTRAL EUROPE '98, [Online] 1998, Seiten 389-397, XP002550950 ISBN: 961-6207-10-5 Gefunden im Internet: URL:http://www.djs.si/proc/catez1998/79.pd f> [gefunden am 2009-10-16]

## Beschreibung

Die vorliegende Erfindung betrifft eine Vorrichtung zur Simulation von in einem Druckwasserreaktor in Abhängigkeit des Betriebszustandes auftretenden thermohydraulischen Phänomenen, aufweisend einen eine Heizeinrichtung aufnehmenden Reaktordruckbehälter, einen Druckhalter, einen Abblasetank, einen Kondensator, sowie wenigstens einen in ein Primärteil und ein Sekundärteil unterteilten Dampferzeuger, wobei der Reaktorbehälter und das Primärteil des Dampferzeugers über eine ein Primärkühlmittel führende und eine leistungsregulierbare Hauptkühlmittelpumpe aufweisende Primärkreisleitung miteinander in strömungstechnischer Verbindung stehen und das Sekundärteil und der Kondensator über eine ein Sekundärkühlmittel führende Sekundärkreisleitung miteinander in strömungstechnischer Verbindung stehen, wobei wenigstens der Reaktordruckbehälter, der Druckhalter, der Abblasetank, der Dampferzeuger sowie die Primärkreisleitung und die Sekundärkreisleitung im Wesentlichen aus einem transparentem Material, vorzugsweise Glas, bestehen, wobei die Sekundärkreisleitung ein Regelventil zur Regelung der Zufuhr des in dem Dampferzeuger erzeugten Dampfes zum Kondensator aufweist.

Ferner betrifft die Erfindung ein Verfahren zur Simulation von einem Druckwasserreaktor in Abhängigkeit des Betriebszustandes auftretenden thermodynamischen Phänomenen.

In Abhängigkeit des Betriebszustandes treten in einem Kernkraftwerk mit Druckwasserreaktor, nachfolgend nur noch Druckwasserreaktor genannt, thermohydraulische Phänomene auf, deren Verständnis sowie die Kenntnis der durch das Auftreten dieser Phänomene entstehenden Folgen für den sicheren Betrieb eines Druckwasserreaktors von existenzieller Bedeutung sind. Daher ist es notwendig, das Betriebspersonal eines Druckwasserreaktors regelmäßig zu schulen und ihm Kenntnisse über die in einem Druckwasserreaktor herrschenden thermohydraulischen Bedingungen nahe zu bringen. Aus pädagogischen Gründen ist es hierbei von Vorteil, wenn die zu vermittelnden Phänomene direkt beobachtet werden können. Hierbei tritt jedoch das Problem auf, dass eine direkte Beobachtung der thermohydraulischen Phänomene im Druckwasserreaktor selbst nicht möglich ist.

Ein typischer Druckwasserreaktor besteht aus einem Reaktordruckbehälter, in dem sich die mit dem radioaktiven Brennstoff beladenen Brennelemente sowie die zur Steuerung der nuklearen Kettenreaktion nötigen Steuerelemente befinden. Der Reaktordruckbehälter selbst wird von einem Primärkühlmittel, Wasser mit einem veränderlichen Anteil an Borsäure, durchflossen. Durch den Primärkreislauf strömt das Primärkühlmittel in einen Dampferzeuger, der die erzeugte Wärme an ein Sekundärkühlmittel, ebenfalls Wasser, abgibt, welches verdampft und als Frischdampf bezeichnet wird. Mit dem erzeugten Frischdampf wird ein Turbinensatz betrieben. Ein wesentlicher Bestandteil des Primärkühlkreislaufs ist der Druckhalten, der das Primärkühlmittel konstant oberhalb des Siededruckes hält. Das Primärkühlmittel hat in einem realen Druckwasserreaktor im Volllastzustand eine mittlere Temperatur von ca. 310°C, wobei der Primärkühlkreislauf unter einem Druck von ca. 155 bar steht. Das Primärkühlmittel siedet nicht. Der komplette Primärkühlkreislauf und die Dampferzeuger sind innerhalb des Reaktorgebäudes in einem Sicherheitsbehälter (Containment) aufgenommen. Lediglich der im Dampferzeuger erzeugte Frischdampf wird aus dem Containment herausgeführt, der nach dem Turbinenprozess kondensierte Frischdampf wird als Speisewasser wieder in dieses zurückgeführt.

Der Sekundärkühlkreislauf eines Druckwasserreaktors wird bei einem Druck von ca. 64 bar entsprechend einer Siedetemperatur von ca. 280°C betrieben.

Eine direkte Beobachtung der thermohydraulischen Phänomene ist im realen Druckwasserreaktor nicht möglich. Die Simulation von Störfällen ist in Versuchsanlagen möglich, jedoch können auch hier thermohydraulische Phänomene, aufgrund der bereits angesprochenen Druck und Temperaturproblematik nicht visuell beobachtet werden. Das Verständnis der thermohydraulischen Zusammenhänge in einem Druckwasserreaktor ist ein wesentlicher Bestandteil für die Bewältigung von Störfällen. Die Beherrschung von Störungen und Störfällen wird vom Bedienpersonal an Kraftwerkssimulatoren trainiert, wobei jedoch auch hier die Vorgänge, wie im realen Druckwasserreaktor, nicht visuell beobachtet werden können.

Die Beschränktheit des Werkstoffes Glas verhindert die Anwendung der Ähnlichkeitstheorie. Ähnlichkeitstheorie ist ein Fachbegriff der Physik und bezeichnet eine Theorie, bei der mit Hilfe dimensionsloser Kennzahlen ein physikalischer Vorgang (Original) auf einen Modellvorgang (Modell) zurückgeführt wird. Damit besteht jedoch das Problem, dass ein maßstabsgerecht verkleinertes Modell eines Druckwasserreaktors keine Gewähr dafür gibt, das die beobachteten thermohydraulischen Phänomene in einem realen Druckwasserreaktor ebenfalls auftreten. Für die Schulung von Kraftwerkspersonal muss jedoch sichergestellt sein, dass die beobachteten Effekte auf die Realanlage übertragen werden können. Die Erfindung stellt dies sicher.

Um thermohydraulische Phänomene zu beobachten, wurde ein Glasmodell eines Druckwasserreaktors geschaffen, das eine Beobachtung der Kühlmittelströme in den einzelnen Modellreaktorkomponenten erlaubt. Aufgrund des eingesetzten Glases sind solche Modelle jedoch hinsichtlich des Drucks und der einzustellenden Temperatur nicht unter realitätsnahen Bedingungen zu betreiben und es treten die in realen Druckwasserreaktoren auftretenden thermohydraulischen Phänomene in diesen Glasmodellen vielfach nicht auf.

Eine gattungsgemäße Simulationsvorrichtung ist aus der DE 36 24 119 A1 bekannt geworden. Diese weist einen Reaktorbehälter mit einer Heizeinrichtung, einen durch eine Abtrennung in ein Primärabteil sowie ein Sekundärabteil unterteilten Dampferzeugerbehälter, einen Druckhalter, einen Abblasebehälter und ein Kondensatorgefäß mit einer Kühleinrichtung auf. Der Reaktorbehälter und das Primärteil des Dampferzeugerbehälters sind in einem mit einer Kühmittelpumpe ausgerüsteten Primärleitungskreis angeordnet, während das Sekundärabteil des Dampferzeugerbehälters sowie das Kondensatorgefäß in einen mit einer Speisepumpe versehenden Sekundärleitungskreis zusammengefasst sind.

Es ist daher die **Aufgabe** der vorliegenden Erfindung, eine Vorrichtung zur Simulation von Betriebszuständen eines Druckwasserreaktors anzugeben, mit welcher eine Vielzahl von in realen Druckwasserreaktoren auftretenden thermohydraulischen Phänomenen beobachtet werden können. Es soll ferner ein Verfahren zur Simulation von in einem Druckwasserreaktor in Abhängigkeit des Betriebszustandes auftretenden thermohydraulischen Phänomenen vorgeschlagen werden.

Vorrichtungsseitig wird zur **Lösung** der Aufgabe vorgeschlagen eine Vorrichtung der eingangs genannten Art, die sich dadurch auszeichnet, dass der Abblasetank mit dem Druckhalter über eine ein Regelventil aufweisende Abblaseleitung und mit einem Vorratsbehälter über eine Ausgleichsleitung in strömungstechnischer Verbindung steht, wobei der Vorratsbehälter eine Einrichtung zur Verminderung des Drucks aufweist.

Verfahrensseitig wird zur **Lösung** der Aufgabe vorgeschlagen ein Verfahren zur Simulation von in einem Druckwasserreaktor in Abhängigkeit des Betriebszustandes auftretenden thermohydraulischen Phänomenen in einer Vorrichtung der erfindungsgemäßen Art, bei dem die Heizleistung der Heizeinrichtung, die dem Kondensator zugeführte Dampfmenge und die Leistung der Hauptkühlmittelpumpe so eingestellt werden, dass in den transparenten Bauteilen mit in einem realen Reaktor auftretenden thermohydraulischen Phänomenen vergleichbare Phänomene auftreten, wobei die für die Heizleistung, Dampfmenge und Leistung der Hauptkühlmittelpumpe einzustellenden Parameter so gewählt sind, dass die in den einzelnen Teilen der Vorrichtung herrschenden Drücke und Temperaturen in einem nichtlinearen Verhältnis zu den in einem realen Druckwasserreaktor herrschenden Drücken und Temperaturen stehen, wobei der Druck in dem Vorratsbehälter in Abhängigkeit der über die Abblaseleitung aus dem Druckhalter in den Abblasetank abgeführten Primärkühlmitteldampfmenge mit der Maßgabe reduziert wird, dass die Differenz zwischen dem im Abblasetank und dem in der Primärkreisleitung herrschenden Drücken im Wesentlichen gleich bleibt.

Durch die erfindungsgemäße Vorrichtung und das erfindungsgemäße Verfahren ist es möglich, die in einem realen Druckwasserreaktor in unterschiedlichen Betriebszuständen auftretenden thermohydraulischen Phänomene sichtbar zu machen. Hierzu werden erfindungsgemäß die Parameter für die Heizleistung der Heizeinrichtung, die dem Kondensator zugeführte Dampfmenge und die Leistung der Hauptkühlmittelpumpe so variiert, dass die in einem realen Druckwasserreaktor bei deutlich höherer Temperatur und höherem Druck auftretenden Phänomene auch im Simulator in Erscheinung treten. Hierzu können die einzustellenden Parameter jedoch nicht in einem gleich bleibenden linearen Verhältnis zu den Realbedingungen variiert werden, sondern müssen phänomenologisch angepasst werden.

In einer Ausgestaltung des Verfahrens können auch Störfälle wie der Druckverlust im Druckhalter des Primärkühlmittelkreislaufes simuliert werden. Hierzu wird der Druckhalter über ein Regelventil in eine strömungstechnische Verbindung mit einem Abblasetank gesetzt, wobei der Abblasetank mit einem Vorratsbehälter in strömungstechnischer Verbindung steht. In dem Abblasetank wird der aus dem oberen Plenum des Druckhalters abgeführte Wasserdampf in eine Vorlage eingeblasen, wo dieser kondensiert. Der Abblasetank selbst steht in strömungstechnischer Verbindung mit einem Vorratsbehälter, welcher eine Einrichtung zur Verminderung des Druckes im Vorratsbehälter aufweist. Hierbei ist zu berücksichtigen, dass die Ausströmung aus Druckbehältern in einem realen Reaktor von der kritischen Ausströmung wesentlich beeinflusst ist. In einem realen Reaktor strömt das Kühlmittel aus dem Primärkühlmittelkreislauf in das Containment. Das Containment selbst ist druckdicht geschlossen, wodurch das Druckverhältnis insgesamt ständig erhalten bleibt. Da der Simulator jedoch nicht ohne Verlust der Beobachtbarkeit der auftretenden thermohydraulischen Phänomene in ein entsprechend druckdichtes Containment eingeschlossen werden kann, muss die Aufrechterhaltung der Druckdifferenz zwischen Abblasebehälter und Druckhalter anderweitig gewährleistet werden. Hierzu wird der Druck im Vorratsbehälter mit der Maßgabe reduziert, dass das Druckverhältnis zwischen Druckhalter und Abblasetank aufrechterhalten wird.

In einer weiteren Ausgestaltung des erfindungsgemäßen Verfahrens weist die Vorrichtung zur Simulation einen zweiten Dampferzeuger auf, welcher im Sekundärteil eine Heizeinrichtung aufweist, wobei die Leistung der Heizeinrichtung so eingestellt wird, dass bei einer strömungstechnischen Abtrennung des zweiten Dampferzeugers vom Reaktordruckbehälter ein Wärmeverlust des zweiten Dampferzeugers kompensiert und die Temperatur des im Sekundärteil des zweiten Dampferzeugers enthaltenen Sekundärkühlmittels im Wesentlichen gehalten werden kann. Hierdurch kann ein Heizrohrbruch in einem Dampferzeuger eines Druckwasserreaktors simuliert werden. Ein solcher Heizrohrbruch im Dampferzeuger führt zu einem Kühlmittelniveauanstieg in diesem. Nach dem Absperren des defekten Dampferzeugers bleibt in der Realanlage die Temperatur in diesem nahezu gleich. Die im Glasmodell eingesetzten Dampferzeuger sind jedoch aus Gründen der Beobachtbarkeit der auftretenden thermohydraulischen Phänomene nicht isoliert, so dass bei Absperrung des Dampferzeugers, also der strömungstechnischen Trennung des Dampferzeugers vom Sekundärkreislauf, die Temperatur im Dampferzeuger aufgrund der Strahlungsverluste schnell drastisch sinkt. Zur Kompensation dieses Wärmeverlustes und zur realitätsnahen Simulation ist es daher erforderlich, eine Zusatzheizeinrichtung in dem Dampferzeuger vorzusehen, welche so eingestellt wird, dass der auftretende Strahlungswärmeverlust durch die Zusatzheizeinrichtung kompensiert wird.

Zur realistischen Simulation des Verhaltens eines realen Druckwasserreaktors kann es erfindungsgemäß vorgesehen sein, dass die Vorrichtung zur Simulation an den einzelnen Bauteilen Temperatursensoren und/oder Drucksensoren aufweist, welche eine entsprechende Temperatur bzw. einen entsprechenden Druck repräsentierende Signale an einen zentralen Steuerungsrechner weiterleiten. Hierbei ist der zentrale Steuerungsrechner wenigstens mit der Heizeinrichtung im Reaktordruckbehälter, der Hauptkühlmittelpumpe, der Einrichtung zur Druckverminderung sowie dem Regelventil zur Regelung des dem Kondensator zugeführten Dampfstromes und zur Regelung des aus dem Druckhalter in den Abblasetank abgeführten Dampfes so verbunden, dass der Steuerungsrechner zumindest die genannten Komponenten des Simulators in Abhängigkeit der durch die Temperatur- und/oder Drucksensoren erhaltenen Werte regelt. Hierzu können erfindungsgemäß im Steuerungsrechner entsprechende Soll-, Grenz- und Steuerwerte für die ermittelten Betriebsparameter hinterlegt sein.

In einer weiteren Ausgestaltung des erfindungsgemäßen Verfahrens wird zur Steuerung der Simulationsvorrichtung und zur Wiedergabe der Betriebsparameter über den Steuerungsrechner von diesem ein Benutzerinterface genutzt, welches im Wesentlichen dem in realen Druckwasserreaktoren eingesetzten Benutzerinterface entspricht.

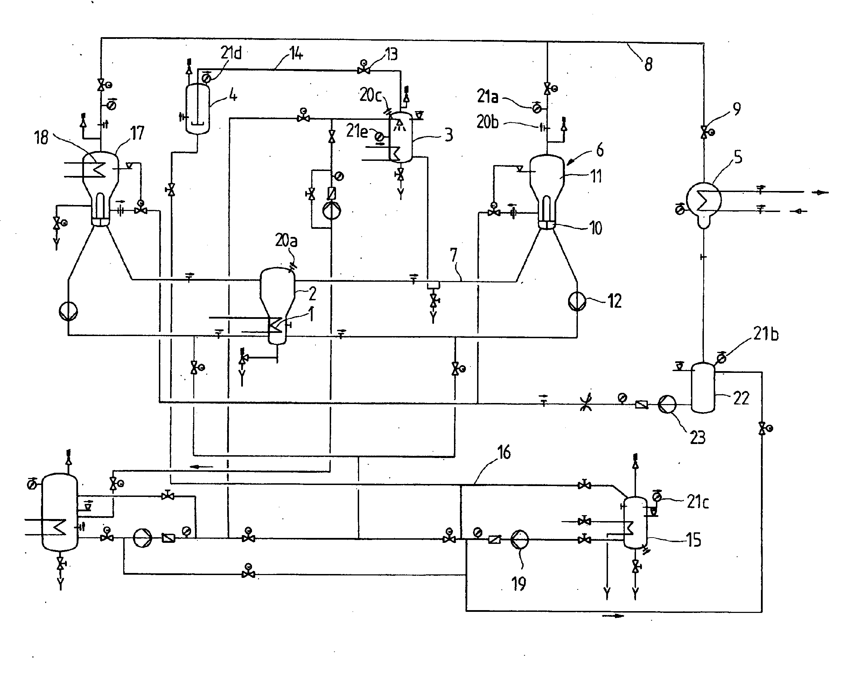

Fig. 1 zeigt eine schematische Darstellung einer zur Durchführung des erfindungsgemäßen Verfahrens geeigneten Vorrichtung zur Simulation von Betriebszuständen in einem Druckwasserreaktor.

In einem im Wesentlichen aus Glas gefertigten Reaktordruckbehälter 2 ist eine Heizeinrichtung 1 angeordnet. Der Reaktordruckbehälter 2 weist darüber hinaus einen Temperatursensor 20a auf. Der Temperatursensor 20a sowie die Heizeinrichtung 1 sind mit einem zentralen Steuerungsrechner leitungstechnisch verbunden. Das im Reaktordruckbehälter erwärmte Primärkühlmittel, als welches im vorliegenden Fall Wasser dient, wird über eine Primärkühlmittelleitung 7 mittels einer Hauptkühlmittelpumpe 12 in einen Dampferzeuger 6 gepumpt. Der Dampferzeuger 6 ist in ein Primärteil 10 und ein Sekundärteil 11 unterteilt. Das im Reaktordruckbehälter 2 durch die Heizeinrichtung erwärmte Kühlmittel strömt durch das Primärteil 10 und erwärmt dabei das im Sekundärteil 11 des Dampferzeugers 6 befindliche Sekundärkühlmittel, welches ebenfalls Wasser ist. Der im Dampferzeuger 6 erzeugte Dampf wird über eine Sekundärkreisleitung 8 einem Kondensator 5 zugeführt. Die Sekundärkreisleitung 8 weist ein Regelventil 9 zur Regelung der aus dem Dampferzeuger 6 und an den Kondensator 5 abgeführten Dampfmenge. Der im Kondensator 5 kondensierte Frischdampf wird an einen Speisewasserbehälter 22 abgeführt, aus welchem das Sekundärkühlmittel über eine Hauptspeisepumpe 23 wieder an den Dampferzeuger 6 zurückgeführt wird. Das Regelventil 9 sowie in der Sekundärkreisleitung 8 vorgesehene Temperaturfühler 20b und Druckfühler 21a sind mit dem zentralen Steuerungsrechner verbunden.

Ein Druckhalter 3 ist strömungstechnisch mit der Primärkreisleitung 7 verbunden und trägt Sorge für einen im Wesentlichen konstanten Primärkühlmitteldruck im Primärkühlmittelkreislauf. In dem Druckhalter 3 sind sowohl ein Drucksensor 21e, als auch ein Temperatursensor 20c vorgesehen, welche mit dem zentralen Steuerungsrechner verbunden sind. Der Druckhalter 3 ist über eine Abblaseleitung 14 mit einem Abblasetank 4 verbunden. In der Abblaseleitung 14 ist ein Regelventil 13 vorgesehen, mit welchem die aus dem Druckhalter 3 an den Abblasetank 4 über die Abblaseleitung 14 abgegebene Dampfmenge geregelt werden kann. Im Abblasetank 4 wird der aus dem Druckhalter 3 abgeführte Dampf in eine Kühlmittelvorlage eingeblasen und kondensiert in dieser. Der Abblasetank 4 ist über eine Ausgleichsleitung 16 strömungstechnisch mit einem Vorratsbehälter 15 verbunden. Der Vorratsbehälter 15 wiederum ist mit einer Einrichtung 19 zur Verminderung des Drucks im Vorratsbehälter 15 verbunden. Der Vorratsbehälter 15 weist einen Drucksensor 21c auf, welcher wie die Einrichtung 19 zur Verminderung des Drucks mit dem zentralen Steuerungsrechner verbunden ist.

Zur Simulation eines Heizrohrbruches in einem Reaktor weist die Vorrichtung zur Simulation von Betriebszuständen in einem Druckwasserreaktor einen zum Dampferzeuger 6 im Wesentlichen identischen zweiten Dampferzeuger 17 auf. Der Dampferzeuger 17 weist im Unterschied zum Dampferzeuger 6 eine Heizeinrichtung 18 im Sekundärteil auf, durch welche die Temperatur im zweiten Dampferzeuger 17 auch nach Abtrennung des Dampferzeugers 17 vom Primärkühlmittelkreislauf im Wesentlichen konstant gehalten werden kann.

In der zur Durchführung des erfindungsgemäßen Verfahrens einsetzbaren Vorrichtung zur Simulation von in Abhängigkeit des Betriebszustandes auftretenden thermohydraulischen Phänomenen in Druckwasserreaktoren sind zumindest der Reaktordruckbehälter 2, der Druckhalter 3, der Abblasetank 4 sowie die Primärkreisleitung 7 im Wesentlichen aus Glas gefertigt, um die auftretenden thermohydraulischen Phänomene beobachten zu können.

Zur Steuerung der Hauptkühlmittelpumpe 12 sowie der Hauptspeisepumpe 23 sind in der zur Durchführung des erfindungsgemäßen Verfahrens geeigneten Anlage Frequenzumrichter vorgesehen. Hierdurch lassen sich die Pumpen über einen weiten Bereich genau steuern, was für die Simulation der zu beobachtenden thermohydraulischen Phänomene notwendig ist.

Durch Variation der Heizleistung der Heizeinrichtung 1, der aus den Dampferzeugern 6 und/oder 17 an den Kondensator 5 abgeführten Dampfmenge sowie der Leistung der Hauptkühlmittelpumpe 12 können die in einem realen Reaktor auftretenden thermohydraulischen Phänomene in der Vorrichtung zur Simulation der Betriebszustände in beobachtbarer Weise erzeugt werden.

Nachfolgend werden beispielhaft in einer Vorrichtung zur Simulation von Betriebszuständen eines Druckwasserreaktors einzustellende Betriebsparameter wiedergegeben, welche die Beobachtung von in realen Druckwasserreaktoren in Abhängigkeit des Betriebszustandes auftretenden thermohydraulischen Phänomenen ermöglicht, wobei sich das erfindungsgemäße Verfahren nicht auf die wiedergegebenen Beispiele beschränken lässt.

### Simulation der Wärmetransportmechanismen in einem Druckwasserreaktor

Zur Simulation der in einem Druckwasserreaktor auftretenden Wärmetransportmechanismen wird die Leistung der Heizeinrichtung 1, welche im vorliegenden Fall maximal 60 kW beträgt, auf 50% reduziert. Die einzustellende mittlere Kühlmitteltemperatur am Temperatursensor 20a beträgt 100°C. Durch Variation der Leistung der Hauptkühlmittelpumpe 12 wird ein Kühlmittelmassenstrom von ca. 10% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 15 - 20% begrenzt und an den Kondensator 5 abgeführt. Der Füllstand des Druckhalters 3 wird auf einen für den Normalbetrieb geltenden Soll-Wert von ca. 0,5m gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt. Das Primärkühlmittel wird zuvor entgast, um eine Desorption von gelösten nichtkondensierbaren Gasen beim Absenken des Kühlmitteldrucks zu verhindern.

### Zu beobachtendes thermohydraulisches Phänomen:

Bei Einstellung der oben genannten Betriebsparameter ist ein unterkühltes Sieden im Reaktordruckbehälter zu beobachten. Nach Absenkung des Druckes im Primärkreislauf tritt Sieden in den U-Rohren der Dampferzeuger auf. Die Größe der beim Sieden auftretenden Blasen variiert in Abhängigkeit der Drehzahl der Hauptkühlmittelpumpen. Nach dem Ausschalten der Hauptkühlmittelpumpen ist ein einphasiger Naturumlauf zu beobachten. Bei erneuter Absenkung des Druckes im Primärkreislauf tritt ein zweiphasiger Naturumlauf auf und es kommt zum Blasensieden im Reaktordruckbehälter. Nach Absenkung des Primärkühlmittelfüllstandes ist ein zweiphasiger Energietransport (Reflux-Condenser) zu beobachten.

### Simulation des Ausfalls einer Hauptkühlmittelpumpe:

Zur Simulation des Ausfalls einer Hauptkühlmittelpumpe wird die Heizleistung der Heizeinrichtung 1 im Reaktordruckbehälter 2 auf 50% gesetzt. Durch Variation der Leistung der Hauptkühlmittelpumpe 12 wird ein Kühlmittelmassenstrom von ca. 60% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 15 - 20% begrenzt und der Frischdampf an den Kondensator 5 abgeführt. Der Füllstand des Druckhalters 3 wird auf einen für den Normalbetrieb geltenden Soll-Wert von ca. 0,5 m gesetzt.

### Zu beobachtende thermohydraulische Phänomene:

Bei Einstellung der zuvor genannten Betriebsparameter wird ein durch die Reduktion des Kerndurchsatzes beeinflusstes unterkühltes Sieden im Reaktordruckbehälter beobachtet. Es treten eine Strömungsumkehr und eine negative Aufwärmspanne im Loop, also im Kühlmittelkreislauf der ausgefallenen Hauptkühlmittelpumpe, ein. Die Wärmeleistung der Dampferzeuger ist stark unterschiedlich. Die Reaktoreintrittstemperatur im Loop der ausgefallenen Pumpe wird kleiner als die Reaktoraustrittstemperatur im Loop der noch laufenden Pumpe. Das Wiederzuschalten der ausgefallenen Pumpe führt zu einer erneuten Strömungsumkehr, und das im Loop der ausgefallenen Pumpe befindliche Wasser wird erneut im Dampferzeuger abgekühlt. Das kalte Wasser erreicht den Reaktordruckbehälter und vermischt sich dort mit dem Kühlmittel im Loop der laufenden Pumpe. Dies führt zu einem Temperatursprung im heißen Loop. Die Wärmeleistung des Dampferzeugers im Loop der ausgefallenen Pumpe steigt sprunghaft an.

### Simulation eines Notstromfalls:

Zur Simulation des Notstromfalles, also der Versorgung eines realen Druckwasserreaktors lediglich mit Hilfe der vorgesehenen Notstromeinrichtungen wird die Leistung der Heizeinrichtung 1 im Reaktordruckbehälter 2 auf 40% gesetzt. Der Druck und damit die für den Wärmedurchgang maßgebliche Temperatur des im Dampferzeuger 6 erzeugten Frischdampfes wird durch Einstellung des Regelventiles 9 auf 3 - 5% begrenzt und der Frischdampf an den Kondensator 5 abgeführt. Die mittlere Kühlmitteltemperatur im Reaktordruckbehälter am Temperatursensor 20a beträgt 104°C. Die Drehzahl der Hauptkühlmittelpumpe 12 wird auf 10% der Maximaldrehzahl eingestellt. Der Füllstand des Druckhalters wird um 0,2m reduziert.

### Zu beobachtende thermohydraulische Phänomene:

Bei Einstellung der oben genannten Parameter laufen die Hauptkühlmittelpumpen verzögert aus und es sammelt sich Wasser mit Reaktoraustrittstemperatur unter dem Deckel des Reaktordruckbehälters. Es tritt ein einphasiger Naturumlauf auf. Die im Sekundärkreislauf vorhandene Wärmeenergie wird über die Dampferzeuger abgefahren, wodurch die Temperaturen des Primärkreislaufes zeitverzögert ebenfalls sinken. Der Siedeabstand zwischen Reaktoraustrittstemperatur und Druckhaltertemperatur wird größer. Es ist zu beobachten, dass das Kühlmittel unter dem Deckel des Reaktordruckbehälters nicht an der Abkühlung teilnimmt. Die Absenkung des Kühlmitteldruckes zur Beibehaltung des Siedeabstandes führt zur Ausbildung einer Dampfblase unter dem Deckel des Reaktordruckbehälters. Das Druckhalterniveau steigt entsprechend der Größe dieser Deckelblase an. Die Reaktoraustrittstemperatur steigt durch das verdrängte Sattwasser sprunghaft auf den Wert der Deckeltemperatur an. Es bildet sich eine Sattwasserschicht zwischen der Deckelblase und dem am einphasigen Naturumlauf teilnehmenden Kühlmittel. Die Deckelblase stabilisiert sich oberhalb der Loopleitung. Bei einer weiteren Druckabsenkung zeigen sich ausschließlich in der Sattwasserschicht Dampfblasen. Durch das Wiederzuschalten der Hauptkühlmittelpumpen wird die Sattwasserschicht ausgespült. Die gebildete Deckelblase kondensiert dann beim Kontakt mit dem kälteren Kühlmittel.

### Simulation eines kleinen Lecks im Reaktorkühlkreislauf

Zur Simulation eines kleinen Lecks im Reaktorkühlkreislauf wird die Leistung der Heizeinrichtung 1 auf 60% reduziert. Die einzustellende mittlere Kühlmitteltemperatur am Temperatursensor 20a beträgt 100°C. Durch Variation der Leistung der Hauptkühlmittelpumpe 12 wird ein Kühlmittelmassenstrom von ca. 10% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 30 - 40% begrenzt und an den Kondensator 5 abgeführt. Der Füllstand des Druckhalters 3 wird auf einen für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt.

### Zu beobachtende thermohydraulische Phänomene:

Der Druckhalterfüllstand sowie der Kühlmitteldruck fallen infolge des Lecks. Es folgt eine Reaktorschnellabschaltung und die Auslösung der Notkühlkriterien durch einen zu tiefen Füllstand im Druckhalter. Durch Auslösung der Notkühlkriterien fallen die Hauptkühlmittelpumpen aus. Ein einphasiger Naturumlauf stellt die Wärmeabfuhr vom Reaktordruckbehälter sicher. Die thermische Energie des Sekundärkreislaufes wird über die Dampferzeuger abgefahren. Das Leck wird durch Hochdruckeinspeisung überspeist, wobei der Druckhalterfüllstand im Anzeigebereich (Normalbereich) bleibt.

### Simulation eines mittleren Lecks im Primärkühlmittelkreislauf

Zur Simulation eines mittleren Lecks im Reaktorkühlkreislauf wird die Leistung der Heizeinrichtung 1 auf 60% reduziert. Die einzustellende mittlere Kühlmitteltemperatur am Temperatursensor 20a beträgt 104 -106°C. Durch Variation der Leistung der Hauptkühlmittelpumpe 12 wird ein Kühlmittelmassenstrom von ca. 10% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 50 - 60% begrenzt und an den Kondensator 5 abgeführt. Der Füllstand des Druckhalters 3 wird auf einen für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt.

### Zu beobachtende thermohydraulische Phänomene:

Infolge des simulierten Lecks fallen der Druckhalterfüllstand sowie der Kühlmitteldruck ab. Es werden eine Reaktorschnellabschaltung sowie die Notkühlkriterien durch das Auslösekriterium des zu niedrigen Druckhalterfüllstandes ausgelöst. Durch Auslösung der Notkühlkriterien fallen die Hauptkühlmittelpumpen aus. Ein einphasiger Naturumlauf stellt die Wärmeabfuhr sicher. Nach einer gewissen Zeit geht der einphasige Naturumlauf in einen zweiphasigen Naturumlauf über. In den teilentleerten Loopleitungen tritt eine Beschleunigung des Zweiphasengemisches auf (Wasserhammer). Der Reaktorkühlkreislauf entleert sich bis zur Unterkante des Loops. Der Wärmeabtransport erfolgt nun über einen zweiphasigen Energietransport (Reflux-Condenser). Anschließend wird der Reaktorkühlkreislauf durch Hochdruckeinspeisung wieder aufgefüllt. Die im Primärkreislauf enthaltene thermische Energie wird über die Dampferzeuger abgefahren.

### Simulation eines Lecks im Druckhalterdampfraum:

Zur Simulation eines Lecks im Druckhalterdampfraum (TMI Störfall) wird die Leistung der Heizeinrichtung 1 auf 70% erhöht. Die einzustellende mittlere Kühlmitteltemperatur am Temperatursensor 20a beträgt 106 -108°C. Durch Variation der Leistung der Hauptkühlmittelpumpe 12 wird ein Kühlmittelmassenstrom von ca. 10% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 60 - 70% begrenzt und an den Kondensator 5 abgeführt. Der Füllstand des Druckhalters 3 wird auf einen für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt. Der Abblasetank wird auf Sollwert gestellt.

### Zu beobachtende thermohydraulische Phänomene:

Das im Druckhalter befindliche Kühlmittel schäumt infolge des Kühlmitteldruckabfalles auf. Der Füllstand im Druckhalter fällt infolge des Leckaustrages durch die Abblaseleitung 14. Die Reaktorschnellabschaltung wird ausgelöst. Das in den Abblasetank 4 ausströmende Kühlmittel kondensiert in der Wasservorlage. Der Kühlmitteldruck fällt weiter und es tritt Blasensieden im Reaktordruckbehälter auf. Durch das Notkühlkriterium des zu niedrigen Kühlmitteldruckes wird die Notkühlung ausgelöst. Hierdurch bedingt fallen die Hauptkühlmittelpumpen aus. Der sich einstellende einphasige Naturumlauf stellt eine Wärmeabfuhr vom Reaktordruckbehälter sicher. Der einphasige Naturumlauf geht in einen zweiphasigen Naturumlauf über. In den teilentleerten Loopleitungen tritt eine Beschleunigung des Zweiphasengemisches auf (Wasserhammer). Der Reaktorkühlkreislauf entleert sich bis zur Unterkante des Loops. Der Wärmetransport erfolgt nun über einen zweiphasigen Energietransport (Reflux-Condenser). Es folgt ein Wiederauffüllen des Reaktorkühlkreislaufes durch Hochdruckeinspeisung. Die Wärmeenergie des Primärkreises wird anschließend über die Dampferzeuger abgefahren.

### Simulation eines Heizrohrbruches im Dampferzeucier (ohne Notstrom):

Zur Simulation eines Heizrohrbruches im Dampferzeuger (ohne Notstrom) wird die Leistung der Heizeinrichtung 1 auf 35% eingestellt. Die einzustellende mittlere Kühlmitteltemperatur am Temperatursensor 20a beträgt 104°C. Durch Variation der Leistung der Hauptkühlmittelpumpe 12 wird ein Kühlmittelmassenstrom von ca. 30% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 0%, dies führt zum maximalen Druck (0,9bar) auf der Sekundärseite, eingestellt. Der Füllstand des Druckhalters 3 wird auf einen höheren Wert (0,6m) als den für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt. Das Primärkühlmittel muss besonders gut entgast werden, um Desorption der gelösten nichtkondensierbaren Gase beim Absenken des Kühlmitteldrucks zu verhindern. Das Dampferzeugerniveau darf nicht größer sein als der Soll-Wert.

### Zu beobachtende thermohvdraulische Phänomene:

Bei Einstellung der oben genannten Betriebsparameter fällt der Druckhalterfüllstand infolge des Leckaustrages. Im Dampferzeuger 17 steigt das Kühlmittelniveau durch den Leckeintrag in die Sekundärseite. Der Kühlmitteldruck fällt und es kommt zu einer massiven Druckabsenkung durch Einsprühen von kaltem Kühlmittel in den Druckhalter. Der defekte Dampferzeuger wird erkannt und isoliert. Über den noch intakten Dampferzeuger wird die thermische Energie des Primärkreislaufes abgefahren. Der Druck im Dampferzeuger steigt durch adiabatische Kompression des Dampfes bis auf den Kühlmitteldruck an. Die Druckdifferenz zwischen Sekundärkreislauf und Primärkreislauf wird gleich Null, wodurch der Leckmassenstrom ebenfalls gleich Null wird. Die Sekundärseite des isolierten Dampferzeugers wird im Bereich der U-Rohre durch den Wärmetransport zur Primärseite mit abgekühlt. Das Sattwasser oberhalb der U-Rohre im defekten Dampferzeuger bestimmt den Druck im System. Sobald der Kühlmitteldruck kleiner als der Sättigungsdruck des Sattwassers ist, kehrt sich der Leckmassenstrom um. Der Dampferzeugerfüllstand fällt infolge dessen und der Druckhalterfüllstand steigt entsprechend an. Die Dampferzeugerheizrohre werden freigelegt und der vorhandene Sattdampf kondensiert an den kalten U-Rohren. Der Dampferzeugerdruck fällt hierdurch wieder unter den Kühlmitteldruck und es tritt eine erneute Umkehr des Leckmassenstromes ein.

### Simulation eines Heizrohrbruches in einem Dampferzeuger (mit Notstrom):

Zur Simulation eines Heizrohrbruches im Dampferzeuger (mit Notstrom) wird die Leistung der Heizeinrichtung 1 auf 35% eingestellt. Die einzustellende mittlere Kühlmitteltemperatur am Temperatursensor 20a beträgt 104°C. Durch Variation der Leistung der Hauptkühlmittelpumpe 12 wird ein Kühlmittelmassenstrom von ca. 30% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 0%, dies führt zum maximalen Druck (0,9bar) auf der Sekundärseite, eingestellt. Der Füllstand des Druckhalters 3 wird auf einen höheren Wert (0,6m) als den für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt. Das Primärkühlmittel muss besonders gut entgast werden, um Desorption der gelösten nichtkondensierbaren Gase beim Absenken des Kühlmitteldrucks zu verhindern. Das Dampferzeugerniveau darf nicht größer sein als der Soll-Wert.

### Zu beobachtende thermohydraulische Phänomene:

Bei, Einstellung der oben genannten Parameter fällt der Druckhalterfüllstand infolge des Leckaustrages. Das Dampferzeugerniveau steigt durch den Leckeintrag entsprechend. Die Hauptkühlmittelpumpen fallen aus. Es erfolgt ein Wärmetransport durch einphasigen Naturumlauf. Der Kühlmitteldruck fällt massiv durch Einsprühung von kaltem Kühlmittel in den Druckhalter. Der defekte Dampferzeuger wird erkannt und isoliert. Die im Primärkreislauf enthaltende thermische Energie wird über den intakten Dampferzeuger abgefahren. Das Kühlmittelniveau im Dampferzeuger steigt durch den Leckeintrag. Der Druck im Dampferzeuger steigt durch adiabatische Kompression des Dampfes bis auf den Kühlmitteldruck an. Die Absenkung des Kühlmitteldruckes führt zu einer Dampfblase im Reaktordruckbehälter. Der Naturumlauf im Loop des defekten Dampferzeugers kommt zum Erliegen. Die Druckdifferenz zwischen dem Sekundärkreislauf und dem Primärkreislauf wird gleich Null, womit der Leckmassenstrom ebenfalls gleich Null wird. Das Sattwasser oberhalb der U-Rohre im defekten Dampferzeuger bestimmt nun den Druck im System. Wird der Kühlmitteldruck kleiner als der Sättigungsdruck des Sattwassers, kehrt sich der Leckmassenstrom um. Es kommt zu einer Dampfblasenbildung auf der Primärseite der Dampferzeuger U-Rohre im defekten Dampferzeuger.

### Simulation Fehlöffnen Druckhaltersprühventil:

Zur Simulation Fehlöffnen Druckhaltersprühventil wird die Leistung der Heizeinrichtung 1 auf 50% eingestellt. Die einzustellende mittlere Kühlmitteltemperatur am Temperatursensor 20a beträgt 102 - 104°C. Durch Variation der Leistung der Hauptkühlmittelpumpe 12 wird ein Kühlmittelmassenstrom von ca. 10% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventils 9 auf 15 - 20%, eingestellt. Der Füllstand des Druckhalters 3 wird auf den für Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden.

### Zu beobachtende thermohydraulische Phänomene:

Durch das Einsprühen von Kühlmittel in den Druckhalter schäumt das Kühlmittel im Druckhalter auf. Der Kühlmitteldruck sinkt schnell. Hierdurch wird die Reaktorschnellabschaltung ausgelöst. Der Siedeabstand zwischen Reaktoraustritt und Druckhalter sinkt weiter. Die Wirkung des Einsprühens von Wasser in den Druckhalter sinkt nach dem manuellen Ausschalten der Hauptkühlmittelpumpen. Der Kühlmitteldruck steigt wieder an.

### Simulation Fehlöffnen Sekundärseitiges Sicherheitsventil:

Zur Simulation des Fehlöffnens eines sekundärseitigen Sicherheitsventils wird die Leistung der Heizeinrichtung 1 auf 50% eingestellt. Die einzustellende mittlere Kühlmitteltemperatur am Temperatursensor 20a beträgt 102 - 104°C. Durch Variation der Leistung der Hauptkühlmittelpumpe 12 wird ein Kühlmittelmassenstrom von ca. 10% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 15 - 20%, eingestellt. Der Füllstand des Druckhalters 3 wird auf den für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt.

### Zu beobachtende thermohydraulische Phänomene:

Durch das Fehlöffnen des sekundärseitigen Sicherheitsventils schäumt das Kühlmittel im Dampferzeuger auf. Das Kühlmittelniveau im Dampferzeuger sinkt durch den Leckaustrag. Der Kühlmitteldruck sowie das Kühlmittelniveau im Druckhalter sinken durch die stärkere Auskühlung. Die Reaktorschnellabschaltung wird ausgelöst. Der Kühlmitteldruck fällt weiter ab und die Hauptkühlmittelpumpen fallen nach Auslösung der Notkühlkriterien aus. Die im Primärkreis vorhandene thermische Energie wird über den intakten Dampferzeuger abgefahren.

### Simulation SDE und PDE:

Zur Simulation der sekundärseitigen- (SDE) und primärseitigen Druckentlastung (PDE) wird die Leistung der Heizeinrichtung 1 auf 40% eingestellt. Die einzustellende mittlere Kühlmitteltemperatur am Temperatursensor 20a beträgt 104°C. Durch Variation der Leistung der Hauptkühlmittelpumpe 12 wird ein Kühlmittelmassenstrom von ca. 30% des Nennmassenstroms eingestellt. Der Druck des Primärkühlmittels im Primärkreislauf 7 wird auf 2 bar eingestellt. Der Druck und damit die für den Wärmedurchgang maßgebliche Temperatur des im Dampferzeuger 6 erzeugten Frischdampfes wird durch Einstellung des Regelventiles 9 auf 0%, dies führt zum maximalen Druck (0,9bar) auf der Sekundärseite, eingestellt. Der Füllstand des Druckhalters 3 wird auf einen höheren Wert (0,6m) als den für den Normalbetrieb geltenden Soll-Wert gesetzt. Zur Anpassung des Füllstandes des Druckhalters 3 kann dieser durch Ablassen von Kühlflüssigkeit aus dem Druckhalter oder durch Zuführen von Kühlflüssigkeit zu dem Druckhalter aus dem Vorratsbehälter angepasst werden. In dem Vorratsbehälter 15 wird ein Druck von 0,5 bis 0,3 bar eingestellt. Das Primärkühlmittel muss besonders gut entgast werden, um Desorption der gelösten nichtkondensierbaren Gase beim Absenken des Kühlmitteldrucks zu verhindern. Das Dampferzeugerniveau darf nicht größer sein als der Soll-Wert.

### Zu beobachtende thermohydraulische Phänomene:

Bei Einstellung der oben genannten Betriebsparameter ist zu beobachten, dass die Hauptkühlmittelpumpen verzögert auslaufen und sich Wasser mit Reaktoraustrittstemperatur unter dem Deckel des Reaktordruckbehälters sammelt. Es bildet sich ein einphasiger Naturumlauf aus, und die Temperatur der Sekundärseite wird über die Dampferzeuger gehalten. Der Dampferzeugerfüllstand fällt. Sobald die Dampferzeuger U-Rohre nicht mehr vollständig bedeckt sind, steigen die Reaktoreintrittstemperatur und -austrittstemperatur proportional an. Durch die Druckentlastung wird Wasser aus der Vorwärmung und dem Speisewasserbehälter in die Sekundärseite eingespeist. Eine Rückwirkung auf die Reaktoreintrittstemperatur und -austrittstemperatur zeigt sich jedoch erst verspätet. Die Dampferzeuger entleeren sich. Der Naturumlauf kommt zum Erliegen. Der Siedeabstand zwischen Reaktoraustrittstemperatur und Druckhaltertemperatur wird kleiner. Die primärseitigen Abblasventile werden geöffnet. Die Reaktoraustrittstemperatur erreicht den Grenzwert für die primärseitige Druckentlastung. Die primärseitige Druckentlastung senkt den Druck im Reaktorkühlkreislauf ab. Es bildet sich eine Deckelblase im Reaktordruckbehälter. Im Reaktoraustritt wird eine zweiphasige Strömung beobachtet. Es stellt sich kein Naturumlauf ein. Die Kühlung des Reaktors erfolgt über die Leckausströmung. Bei Unterschreiten des Druckspeicherdruckes speisen Druckspeicher Kühlmittel in den Reaktorkühlkreislauf ein und kühlen den Reaktor durch das eingespeiste Kühlmittel. Sobald die Einspeisung beendet ist, steigt die Reaktoraustrittstemperatur wieder an.

### Bezugszeichenliste

- 1: Heizeinrichtung
- 2: Reaktordruckbehälter
- 3: Druckbehälter
- 4: Abblasetank
- 5: Kondensator
- 6: Dampferzeuger
- 7: Primärkreisleitung
- 8: Sekundärkreisleitung
- 9: Regelventil
- 10: Primärteil
- 11: Sekundärteil
- 12: Hauptkühlmittelpumpe
- 13: Regelventil
- 14: Abblaseleitung
- 15: Vorratsbehälter
- 16: Ausgleichsleitung
- 17: Dampferzeuger
- 18: Heizeinrichtung
- 19: Einrichtung
- 20 a - c: Temperatursensoren
- 21 a - e: Drucksensoren
- 22: Speisewasserbehälter
- 23: Hauptspeisepumpe

## Patentansprüche

1. Vorrichtung zur Simulation von in einem Druckwasserreaktor in Abhängigkeit des Betriebszustandes auftretenden thermohydraulischen Phänomen, aufweisend einen eine Heizeinrichtung (1) aufnehmenden Reaktordruckbehälter (2), einen Druckhalter (3), einen Abblasetank (4), einen Kondensator (5), sowie wenigstens einen in ein Primärteil (10) und ein Sekundärteil (11) unterteilten Dampferzeuger (6), wobei der Reaktorbehälter (2) und das Primärteil (10) des Dampferzeugers (6) über eine ein Primärkühlmittel führende und eine leistungsregulierbare Hauptkühlmittelpumpe (12) aufweisende Primärkreisleitung (7) miteinander in strömungstechnischer Verbindung stehen und das Sekundärteil (11) und der Kondensator (5) über eine ein Sekundärkühlmittel führende Sekundärkreisleitung (8) miteinander in strömungstechnischer Verbindung stehen, wobei wenigstens der Reaktordruckbehälter (2), der Druckhalter (3), der Abblasetank (4), der Dampferzeuger (6) sowie die Primärkreisleitung (7) und die Sekundärkreisleitung (8) im Wesentlichen aus einem transparentem Material, vorzugsweise Glas, bestehen, wobei die Sekundärkreisleitung (8) ein Regelventil (9) zur Regelung der Zufuhr des in dem Dampferzeuger (6) erzeugten Dampfes zum Kondensator (5) aufweist, **dadurch gekennzeichnet, dass** der Abblasetank (4) mit dem Druckhalter (3) über eine ein Regelventil (13) aufweisende Abblaseleitung (14) und mit einem Vorratsbehälter (15) über eine Ausgleichsleitung (16) in strömungstechnischer Verbindung steht, wobei der Vorratsbehälter (15) eine Einrichtung (19) zur Verminderung des Drucks aufweist.

2. Verfahren zur Simulation von in einem Druckwasserreaktor in Abhängigkeit des Betriebszustandes auftretenden thermohydraulischen Phänomen in einer Vorrichtung nach Anspruch 1 bei dem
die Heizleistung der Heizeinrichtung (1), die dem Kondensator (5) zugeführte Dampfmenge und die Leistung der Hauptkühlmittelpumpe (12) so eingestellt werden, dass in den transparenten Bauteilen (2, 3, 4, 6, 7) mit in einem realen Reaktor auftretenden thermohydraulischen Phänomenen vergleichbare Phänomene auftreten, wobei die für die Heizleistung, Dampfmenge und Leistung der Hauptkühlmittelpumpe einzustellenden Parameter so gewählt sind, dass die in den einzelnen Teilen der Vorrichtung herrschenden Drücke und Temperaturen in einem nichtlinearen Verhältnis zu den in einem realen Druckwasserreaktor herrschenden Drücken und Temperaturen stehen, wobei der Druck in dem Vorratsbehälter (15) in Abhängigkeit der über die Abblaseleitung (14) aus dem Druckhalter (3) in den Abblasetank (4) abgeführten Primärkühlmitteldampfmenge mit der Maßgabe reduziert wird, dass die Differenz zwischen dem im Abblasetank (4) und dem in der Primärkreisleitung (7) herrschenden Drücken im Wesentlichen gleich bleibt.

3. Verfahren nach Anspruch 2, wobei die Vorrichtung zur Simulation einen zweiten Dampferzeuger (17) aufweist, welcher im Sekundärteil eine Heizeinrichtung (18) aufweist, wobei die Leistung der Heizeinrichtung so eingestellt wird, dass bei einer strömungstechnischen Abtrennung des zweiten Dampferzeugers (17) vom Reaktordruckbehälter (2) ein Wärmeverlust des zweiten Dampferzeugers kompensiert und die Temperatur des im Sekundärteil des zweiten Dampferzeugers enthaltenen Sekundärkühlmittels im Wesentlichen gehalten werden kann.

4. Verfahren nach einem der vorhergehenden Ansprüche 2 oder 3, wobei zumindest die Heizeinrichtung (1), die Regelventile (9, 13), die Hauptkühlmittelpumpe (12), die Einrichtung (19) zur Druckverminderung, sowie die Temperatursensoren (20a-c), sowie die Drucksensoren (21a-d) mit einem zentralen Steuerungsrechner verbunden sind und der Steuerungsrechner die Heizeinrichtung (1), die Regelventile (9, 13), die Hauptkühlmittelpumpe (12), die Einrichtung (19) zur Druckverminderung in Abhängigkeit der über die Temperatursensoren (20a-c) sowie die Drucksensoren (21a-e) ermittelten Parameter steuert.

5. Verfahren nach Anspruch 4, wobei zur Steuerung der Simulationsvorrichtung und zur Wiedergabe der Betriebsparameter über den Steuerungsrechner von diesem ein Benutzerinterface genutzt wird, welches im Wesentlichen dem in realen Druckwasserreaktoren eingesetzten Benutzerinterface entspricht.

## Claims

1. A device for the simulation of thermohydraulic phenomena occurring in a pressurized water reactor in dependence on the operating state, comprising a reactor pressure vessel (2) which receives a heating device (1), a pressurizer (3), a pressure relief tank (4), a condenser (5), as well as at least one steam generator (6) which is divided into a primary part (10) and a secondary part (11), wherein the reactor vessel (2) and the primary part (10) of the steam generator (6) are in fluidic connection with each other via a primary circuit line (7) which conducts a primary coolant and comprises a main coolant pump (12) the capacity of which is adjustable, and the secondary part (11) and the condenser (5) are in fluidic connection with each other via a secondary circuit line (8) which conducts a secondary coolant, wherein at least the reactor pressure vessel (2), the pressurizer (3), the pressure relief tank (4), the steam generator (6) as well as the primary circuit line (7) and the secondary circuit line (8) are essentially made of a transparent material, preferably glass, wherein the secondary circuit line (8) comprises a control valve (9) for controlling the supply of the steam generated in the steam generator (6) to the condenser (5), **characterized in that** the pressure relief tank (4) is in fluidic connection to the pressurizer (3) via a pressure relief line (14) comprising a control valve (13) and to a storage reservoir (15) via a compensating line (16), wherein the storage reservoir (15) comprises a device (19) for reducing the pressure.

2. A method for the simulation of thermohydraulic phenomena occurring in a pressurized water reactor in dependence on the operating state in a device according to claim 1, in which
the heating capacity of the heating device (1), the amount of steam supplied to the condenser (5) and the capacity of the main coolant pump (12) are set such that phenomena occur in the transparent components (2, 3, 4, 6, 7), which phenomena are comparable to thermohydraulic phenomena which occur in a real reactor, wherein the parameters to be set for the heating capacity, the amount of steam and the capacity of the main coolant pump are chosen such that the pressures and temperatures prevalent in the individual parts are in a non-linear proportion to the pressures and temperatures prevalent in a real pressurized water reactor, wherein the pressure in the storage reservoir (15) is reduced in dependence on the primary coolant steam amount let out from the pressurizer (3) via the pressure relief line (14) into the pressure relief tank (4) with the proviso that the difference between the pressures prevalent in the pressure relief tank (4) and in the primary circuit line (7) essentially remains the same.

3. A method according to claim 2, wherein the device for the simulation comprises a second steam generator (17) which comprises a heating device (18) in the secondary part, wherein the capacity of the heating device is set such that in case of a fluidic separation of the second steam generator (17) from the reactor pressure vessel (2) a heat loss of the second steam generator can be compensated and the temperature of the secondary coolant contained in the secondary part of the second steam generator can be essentially maintained.

4. A method according to one of the preceding claims 2 or 3, wherein at least the heating device (1), the control valves (9, 13), the main coolant pump (12), the device (19) for reducing the pressure and the temperature sensors (20a-c) as well as the pressure sensors (21 a-ed) are connected to a central control computer and the control computer controls the heating device (1), the control valves (9, 13), the main coolant pump (12), the device (19) for reducing the pressure in dependence on the parameters determined by the temperature sensors (20a-c) as well as the pressure sensors (21a-e).

5. A method according to claim 4, wherein a user interface that essentially corresponds to the user interface used in real pressurized water reactors is used by the control computer for controlling the simulation device and for reproducing the operating parameters.

## Revendications

1. Dispositif pour simuler des phénomènes thermohydrauliques se produisant dans un réacteur à eau sous pression en fonction de l'état de fonctionnement, comprenant une cuve sous pression de réacteur (2) recevant un dispositif de chauffage (1), un dispositif de maintien de pression (3), un réservoir de détente de pression (4), un condensateur (5) ainsi qu'au moins un générateur de vapeur (6) divisé en une partie primaire (10) et une partie secondaire (11), la cuve de réacteur (2) et la partie primaire (10) du générateur de vapeur (6) étant en liaison fluidique l'une à l'autre par une conduite de circulation primaire (7) qui conduit un fluide de refroidissement primaire et comprend une pompe principale à fluide de refroidissement (12) dont la puissance est réglable, et la partie secondaire (11) et le condensateur étant en liaison fluidique l'un à l'autre par une conduite de circulation secondaire (8) qui conduit un fluide de refroidissement secondaire, au moins la cuve sous pression de réacteur (2), le dispositif de maintien de pression (3), le réservoir de détente de pression (4), le générateur de vapeur (6) ainsi que la conduite de circulation primaire (7) et la conduite de circulation secondaire (8) étant essentiellement fabriqués en matière transparente, de préférence en verre, la conduite de circulation secondaire (8) comprenant un soupape de réglage (9) pour régler l'alimentation en vapeur généré dans le générateur de vapeur (6) au condensateur (5), **caractérisé en ce que** le réservoir de détente de pression (4) est en liaison fluidique avec le dispositif de maintien de pression (3) via une conduite de détente de pression (14) comprenant un soupape de réglage (13) et avec un réservoir (15) via une conduite de compensation (16), le réservoir (15) comprenant un dispositif (19) pour réduire la pression.

2. Procédé pour simuler des phénomènes thermohydrauliques se produisant dans un réacteur à eau sous pression en fonction de l'état de fonctionnement dans un dispositif selon la revendication 1, dans lequel
la puissance de chauffage du dispositif de chauffage (1), la quantité de vapeur amenée au condensateur (5) et la puissance de la pompe principale à fluide de refroidissement (12) sont réglées de sorte que des phénomènes se produisent dans les composants transparents (2, 3, 4, 6, 7), lesquels phénomènes sont comparables aux phénomènes thermohydrauliques se produisant dans un réacteur réel, les paramètres à régler pour la puissance de chauffage, la quantité de vapeur et la puissance de la pompe principale à fluide de refroidissement étant choisis de sorte que les pressions et les températures régnant dans les parties individuelles du dispositif sont dans un rapport non-linéaire avec les pressions et les températures régnant dans un réacteur à eau sous pression réel, la pression dans le réservoir (15) étant diminuée en fonction de la quantité de vapeur de fluide de refroidissement primaire déchargée du dispositif de maintien de pression (3) par la conduite de détente de pression (14) dans le réservoir de détente de pression (4) à condition que la différence entre les pressions régnant dans le réservoir de détente de pression (4) et dans la conduite de circulation primaire (7) reste essentiellement la même.

3. Procédé selon la revendication 2, dans lequel le dispositif de simulation comprend un deuxième générateur de vapeur (17) qui comprend un dispositif de chauffage (18) dans la partie secondaire, la puissance du dispositif de chauffage étant réglée de sorte que si le deuxième générateur de vapeur (17) est séparé de manière fluidique de la cuve sous pression du réacteur (2), une perte de chaleur du deuxième générateur de vapeur sera compensée et la température du fluide de refroidissement secondaire contenu dans la partie secondaire du deuxième générateur de vapeur pourra essentiellement être maintenue.

4. Procédé selon l'une des revendications précédentes 2 ou 3, dans lequel au moins le dispositif de chauffage (1), les soupapes de réglage (9, 13), la pompe principale à fluide de refroidissement (12), le dispositif (19) pour réduire la pression ainsi que les capteurs de température (20a-c) et les capteurs de pression (21 a-e) sont reliés à un ordinateur de commande central et l'ordinateur de commande central commande le dispositif de chauffage (1), les soupapes de réglage (9, 13), la pompe principale à fluide de refroidissement (12), le dispositif (19) pour réduire la pression en fonction des paramètres déterminés par les capteurs de température (20a-c) ainsi que par les capteurs de pression (21a-e).

5. Procédé selon la revendication 4, dans lequel l'ordinateur de commande central utilise une interface utilisateur qui correspond essentiellement à l'interface utilisateur utilisée dans des réacteurs à eau sous pression réels pour commander le dispositif de simulation et pour reproduire les paramètres de fonctionnement.
